# EUROPEAN PATENT SPECIFICATION

(11) **EP 2 911 129 B1**
(45) Date of publication and mention of the grant of the patent: **27.03.2019**
(21) Application number: 15150027.9
(22) Date of filing: 02.01.2015
(51) Int. Cl.: G08B 21/22, G06F 17/30, G06Q 10/10, G08B 21/24, H04L 29/08

(54) **Automated reminder system**
Automatisiertes Erinnerungssystem
Système de rappel automatique

(30) Priority: 25.02.2014 US 201414188737
(43) Date of publication of application: 26.08.2015
(73) Proprietor: Oz, Doron, Sunnyvale, CA 94087 (US)
(72) Inventor: Oz, Doron, Sunnyvale, CA 94087 (US)
(74) Representative: Hofstetter, Schurack & Partner

(56) References cited:
- WO-A2-2012/109472
- US-A1- 2006 219 783

## Description

### FIELD OF THE INVENTION

The present invention relates generally to methods and systems for automated communications, and particularly to automatic generation and delivery of reminders.

### BACKGROUND

Every year in the United States, tens of small children die after being forgotten in closed vehicles in hot weather. In many of these cases, a parent or other caregiver becomes distracted and forgets to drop a child off at daycare on the way to work or errands, and may park and leave the vehicle without noticing that the child is inside. During hot weather, the temperature in a car parked in the sun can quickly rise to well over 100°F, leading to death of the child due to hyperthermia.

A number of solutions to this problem have been proposed in the patent literature. For example, U.S. Patent Application Publication 2013/0076502 describes a method to remind drivers that there is a child or pet inside a vehicle, consisting of two cues, one visual and one physical. The visual cue is intended to serve as a constant reminder while the driver is in the vehicle, while the physical cue reminds the driver at end of the trip.

As another example, U.S. Patent 8,058,983 describes a baby seat occupant detection system, which is said to remind forgetful or negligent caregivers when they have an infant in a car seat inside a vehicle and have left a predetermined proximity around the vehicle. In one embodiment, a temperature detector sounds an alarm to alert a caregiver when the temperature inside a vehicle
has risen to a level that is unsafe for the occupant left unattended in the vehicle.

Automated reminder systems generally are known in the art. For example, U.S. Patent Application Publication 2009/0290696 describes a communication system that can operate to generate, maintain, and implement reminders associated with communications and other events. A reminder can be automatically generated and scheduled for one or more users of the communication system when a user is unavailable or unable to take a call. As another example, U.S. Patent Application Publication 2001/0019603 describes a call server for providing reminders to a user via a telephone. If the user does not answer the telephone reminder, a schedule reminder application initiates additional calls to secondary numbers and devices such as cellular phones, pagers, and home telephone numbers.

In this regard, U.S. 2006/0219783 A1 discloses a RF-ID tag system for an item between two locations, and WO 2012/109472 A2 discloses systems and methods for indicating the presence of a child in a vehicle.

### SUMMARY

Embodiments of the present invention provide systems, methods and software according to the independent claims to ensure that caregivers drop off children in their charge on schedule.

There is therefore provided, in accordance with an embodiment of the present invention, a method for automated communication, which includes receiving in a server scheduling information with regard to a child, including a daily drop-off time of the child on at least a certain day of the week, an identity of a primary caregiver who is usually responsible for dropping off the child at the drop-off time, and a respective contact identifier of at least one secondary caregiver. A first query is automatically sent, over a communication channel from the server to the primary caregiver on the certain day at a time within a predefined interval following the drop-off time, as to whether the primary caregiver dropped off the child. Upon failing to receive a positive reply to the first query, at least one second query is automatically sent from the server, over a communication network to the respective contact identifier of the at least one secondary caregiver, as to whether the at least one secondary caregiver dropped off the child. An alert may optionally be issued upon failing to receive at the server a positive reply to any of the first and second queries.

In some embodiments, the method includes downloading to a mobile communication device of the primary caregiver a client software application for installation on the mobile communication device, wherein the server receives the scheduling information from the client software application and sends the first query to be processed by the client software application and presented to the primary caregiver by the mobile communication device.

Sending the at least one second query may include sending a text message to a cellular telephone of the at least one secondary caregiver or placing a voice call to a cellular telephone of the at least one secondary caregiver.

In a disclosed embodiment, sending the at least one second query includes sending a sequence of respective second queries to a succession of secondary caregivers whose contact numbers are stored on the server, until one of the secondary caregivers gives a positive reply.

In one embodiment, the method includes automatically monitoring an activity of at least the primary caregiver so as to detect that the child has been dropped off, and canceling one or more of the first and second queries upon detecting that the child has been dropped off.

There is also provided, in accordance with an embodiment of the invention, apparatus for automated communication, including a communication interface and a memory, configured to store information with regard to a child, including a daily drop-off time of the child on at least a certain day of the week, an identity of a primary caregiver who is usually responsible for dropping off the child at the drop-off time, and a respective contact identifier of at least one secondary caregiver. A processor is configured to send automatically, via the communication interface to the primary caregiver on the certain day at a time within a predefined interval following the drop-off time, a first query as to whether the primary caregiver dropped off the child, and upon failing to receive a positive reply to the first query, and to send automatically, via the communication interface, at least one second query to the respective contact identifier of the at least one secondary caregiver as to whether the at least one secondary caregiver dropped off the child.

There is additionally provided, in accordance with an embodiment of the invention, a computer software product, including a non-transitory computer-readable medium in which program instructions are stored, which instructions, when read by a computer, cause the computer to store information with regard to a child, including a daily drop-off time of the child on at least a certain day of the week, an identity of a primary caregiver who is usually responsible for dropping off the child at the drop-off time, and a respective contact identifier of at least one secondary caregiver. The instructions cause the computer to send automatically, via a communication channel to the primary caregiver on the certain day at a time within a predefined interval following the drop-off time, a first query as to whether the primary caregiver dropped off the child, and upon failing to receive a positive reply to the first query, and to send automatically, via a communication network, at least one second query to the respective contact identifier of the at least one secondary caregiver as to whether the at least one secondary caregiver dropped off the child.

The present invention will be more fully understood from the following detailed description of the embodiments thereof, taken together with the drawings in which:

### BRIEF DESCRIPTION OF THE DRAWINGS

Fig. 1 is schematic pictorial illustration of an automated reminder system, in accordance with an embodiment of the present invention;
Fig. 2 is a flow chart that schematically illustrates a method for configuring an automated reminder system; and
Fig. 3 is a flow chart that schematically illustrates a method for providing automated reminders, in accordance with an embodiment of the present invention.

### DETAILED DESCRIPTION OF EMBODIMENTS

Many of the fatal incidents in which a child is forgotten in a vehicle occur on occasions when someone other than the primary caregiver is responsible for taking the child to daycare. The term "primary caregiver" is used, in the present description and in the claims, to mean specifically the person who actually takes responsibility most days for delivering the child to daycare or to some other routine destination. (This primary caregiver in this sense may be the child's father, mother, or other responsible adult, who may or may not be the person primarily responsible for caring for the child while at home.) The primary caregiver drops off the child as part of his or her routine, and is therefore unlikely to forget to do so. On the other hand, secondary caregivers - i.e., people other than the primary caregiver - are more likely to become distracted and to forget that there is a child in the car.

As an example, consider a situation in which the child's father is the primary caregiver and ordinarily takes the child to nursery school on the way to work. One day, however, the father has a meeting out of town, and asks the mother to drop off the child on the way to her office. While driving the car, the mother receives a telephone call, informing her of a crisis situation that she will need to handle when she gets to the office. Preoccupied by the crisis, the mother drives straight to her office, forgetting to take the turnoff for the nursery school to drop off the child, who meanwhile may have fallen asleep, strapped into his car seat in the back of the car. The mother rushes up to her office, and may not remember the child at all until much later in the day.

Embodiments of the present invention that are described hereinbelow address this sort of situation by enabling caregivers to set up a chain of reminders, to be followed each day that a child is supposed to be dropped off. The caregiver or other person setting up the chain provides scheduling information to a server with regard to a child, including a daily drop-off time of the child on one or more specified days of the week. The information also includes the identity of the primary caregiver who is usually responsible for dropping off the child at the drop-off time, and respective contact identifiers of one or more secondary caregivers. The "identity" and "contact identifiers" in this context typically comprise telephone numbers, e-mail addresses, and/or other identification numbers or names that are associated with the caregivers' mobile and fixed telephones and other communication devices. In a typical embodiment, a client software application for the present purposes is downloaded and installed on a mobile communication device of the primary caregiver, who may then upload the necessary information to the server via the client application.

On each of the specified days, the server sends, within a predefined interval following the daily drop-off time, a query over a communication channel to the primary caregiver as to whether the primary caregiver dropped off the child. On most days, the primary caregiver will typically return a positive reply. Upon failing to receive a positive reply to this first query, however (because the primary caregiver has given a negative answer or no answer), the server automatically sends, over a communication network, a query to the contact identifier of a secondary caregiver as to whether the secondary caregiver dropped off the child. Optionally, the negative answer by the primary caregiver may identify the secondary caregiver who is responsible for dropping off the child on the day in question, in which case the server will send a second query to this secondary caregiver. Alternatively or additionally, if the caregiver who set up the chain of reminders provided identifiers for multiple secondary caregivers, the server may send a sequence of second queries to the secondary caregivers in succession, until one of the secondary caregivers gives a positive reply, indicating that the child has been dropped off. These queries may typically take the form of text messages or automated voice messages delivered to the caregivers' mobile telephones, although any other suitable mode of messaging may alternatively be used. In this manner, in most cases, even if a secondary caregiver has forgotten to drop off the child, he or she will be reminded by the query in time to prevent harm to the child.

On the other hand, if the server fails to receive a positive reply from any of the caregivers, it may issue an alert to ensure that some action is taken. The alert may comprise, for example, a call back to the primary caregiver, a call to the child's daycare facility or to another emergency number provided by the caregiver who set up the reminder chain, or even an alarm sent to a police/rescue emergency number.

Additionally or alternatively, the server may automatically monitor the activity of at least the primary caregiver in order to detect that the child has been dropped off. For example, the server may receive and process geo-location signals that are automatically generated and sent by the application installed on the mobile communication device in order to ascertain that the primary caregiver arrived at the child's daycare facility and remained there long enough to have dropped the child off. In this case, the server may determine that the query chain is not needed and avoid the attendant communication traffic and disturbance of the caregivers. On the other hand, upon determining, based on the geo-location signals, that the primary caregiver has not dropped the child off, the server may automatically engage the chain of reminders or, alternatively or additionally, may monitor the activity of one or more of the secondary givers in order to determine whether any of them have stopped at the daycare center.

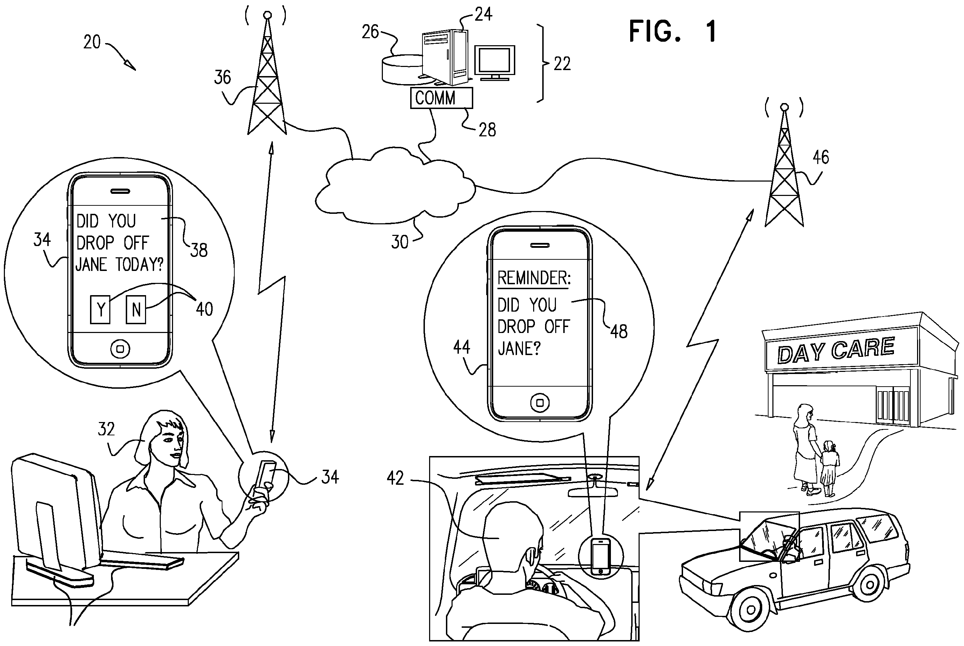

Fig. 1 is schematic pictorial illustration of an automated reminder system 20, in accordance with an embodiment of the present invention. The system is built around a server 22, which typically comprises a general-purpose computer processor 24, with a memory 26 and a suitable communication interface 28. Processor 24 typically operates under the control of software, which when read by the processor, causes the server to carry out the functions that are described herein. This software may be downloaded to server 22 in electronic form, over a network, for example. Additionally or alternatively, the software may be stored on tangible, non-transitory media, such as optical, magnetic, or electronic memory media (which may be comprised in memory 26). Further additionally or alternatively, at least some of the functions of server 22 may be implemented in hard-wired or programmable logic.

Server 22 communicates via a network 30 with mobile communication devices 34, 44, belonging respectively to a primary caregiver 32 and a secondary caregiver 42 of a given child. Although for the sake of simplicity, only these two caregivers and their mobile communication devices are shown in this figure, in practice server 22 typically monitors concurrently a large number of caregivers, who are responsible for various different children. Mobile communication devices 34 and 44 are typically mobile telephones, and at least device 34 is desirably a smart phone, which is capable of downloading and running applications. Additionally or alternatively, devices 34 and 44 may comprise any suitable sorts of communication devices that are known in the art, such as personal digital assistants, tablet or laptop computers, or even two-way radios.

Primary caregiver 32 in the pictured scenario has downloaded a reminder application to her device 34, which communicates with server 22 via a communication channel 36 (represented schematically by a cellular communication tower). When caregiver 32 joins system 20, server 22 receives (for example, by input from the application on device 34) and stores information regarding the days and time at which the child is to be dropped off at daycare and the contact identifiers of devices 34 and 44.

Thereafter, on each of the appointed days, server 22 prompts the application on device 34 shortly after the appointed drop-off time to query caregiver 32 as to whether she has dropped off the child. The query may be presented on a screen 38 of device 34, and may include one or more control buttons 40 that the caregiver may press in order to respond. (In the pictured embodiment, for the sake of simplicity, only "Y" and "N" buttons are shown, but alternatively, several choices may be presented on screen 38, such as "YES," "DAD DROPS OFF," and "NO NEED TODAY," in order to give primary caregiver 32 a richer range of possible interactions.) Alternatively or additionally, the application may present an audible prompt, such as a computer-generated voice prompt, to which caregiver 32 may respond either orally or by pressing the touch screen or other tactile control on device 34. Further alternatively or additionally, server 22 may place a voice call or send a text message to device 34, using the built-in communication facilities of the device without necessarily running the application.

On the particular day that is illustrated in Fig. 1, primary caregiver 32 did not take the child to daycare, but rather entrusted the task to secondary caregiver 42. Therefore, in response to the query presented on screen 38, caregiver 32 answers in the negative. Server 22 therefore consults memory 26 to find the next caregiver in the chain for this child, and thus sends a message 48 to mobile communication device 44 via a communication channel 46. If the reminder application has also been installed on device 44, server 22 may convey message 48 via the application. It is not necessary that the application be installed on device 44, however, and server 22 may alternatively place a voice call, send a short message service (SMS) text message, or use any suitable messaging facility or application that is available. Caregiver 42 will typically respond to server 22 using device 44, to indicate that he has dropped off the child, via the same channel and message type as was used to convey message 48.

In an alternative embodiment, primary caregiver 32 may respond to the prompt on screen 38 by identifying the particular secondary caregiver who is responsible on the given day (for example, "DAD DROPS OFF"), or by indicating that no further follow-up is need on this particular day. Server 22 will then send message 48 only to the identified secondary caregiver. In this case, the chain of caregivers will include only the primary and the identified secondary caregiver. If this secondary caregiver fails to respond, the server will typically alert the primary caregiver, who can then take whatever action is appropriate.

Additionally or alternatively, as noted earlier, device 34 and possibly device 44 may indicate their respective locations to server 22 by transmitting geo-location signals. Such signals may, for example, comprise geographical coordinates generated by the Global Positioning System (GPS) receivers in devices 34 and 44, which the reminder application may read and transmit to server 22 periodically around the times at which the child is to be dropped off. Server 22 may infer, based on these readings, whether one of the caregivers has actually dropped off the child, instead of or as a supplement to the actual responses provided by primary caregiver 32 and possibly secondary caregiver 42.

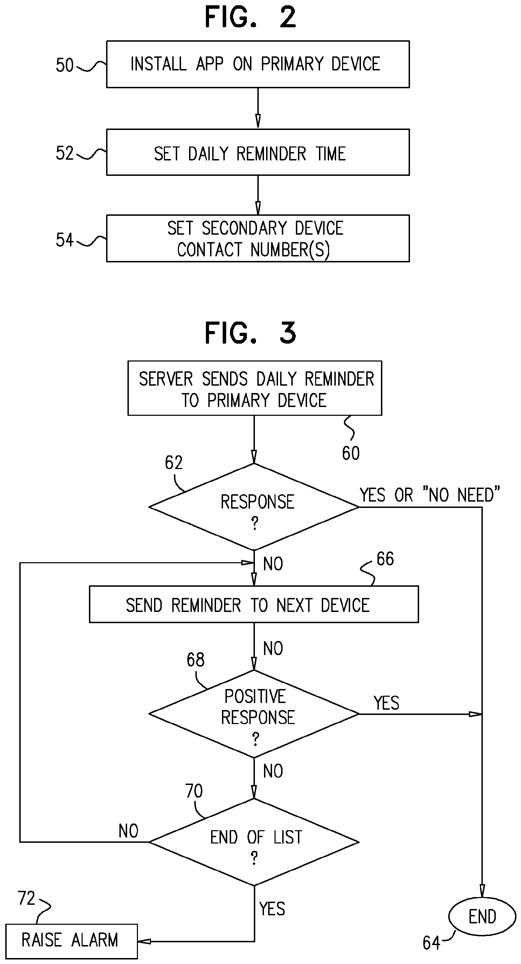

Fig. 2 is a flow chart that schematically illustrates a method for configuring system 20, in accordance with an embodiment of the present invention. Typically, the process starts when primary caregiver 32 downloads the reminder application to mobile communication device 34 (referred to here as the "primary device"), at an application download step 50. The application may be downloaded, for example, from an on-line application store. Alternatively, the present methods may be implemented without necessarily installing any dedicated application on devices 34 and 44. Instead, system 20 may be configured, for example, by accessing a Web site associated with server 22 or even by e-mail, telephone, or paper communications with the operator of server 22.

Whether via the application on device 34 or by other means, caregiver 32 (or another person) sets reminder parameters, at a reminder setup step 52. These parameters typically include the days of the week on which the child is to be dropped off (at daycare or at any other location) and the scheduled drop-off time. The parameters may also include a time interval, indicating how long the server should wait after the scheduled drop-off time to start sending reminders, as well as the location of the drop-off, such as the street address.

The person setting up the application also inputs the contact identifiers of the communication devices to be contacted by server 22, at a contact input step 54. If the reminder application is installed on device 34, the application may automatically inform the server of the identity of device 34, wherein the "identity" may include the telephone number, e-mail address, and/or other contact identifiers of caregiver 32. Alternatively, the application may prompt the caregiver to input these items of information. Caregiver 32 (or another person configuring the system) also provides contact identifiers for secondary caregiver 42, such as the telephone numbers and/or e-mail address of device 44. Multiple devices and/or multiple secondary caregivers may be identified in this manner, and server 22 may store the contact identifiers in memory 26 in order of priority, indicating the order in which the server is to contact the communication devices when necessary. The system setup at this stage may also include selection of an emergency number to contact in case none of the caregivers respond.

Fig. 3 is a flow chart that schematically illustrates a method for providing automated reminders in system 20, in accordance with an embodiment of the present invention. The method is described here, for the sake of convenience and clarity, with reference to the elements of system 20, but it may similarly be implemented in any other suitable sort of system configuration, possibly using other sorts of communication devices.

On each day on which the child is scheduled to be dropped off, server 22 sends a reminder to mobile communication device 34 of primary caregiver 32, at a primary reminder step 60. The reminder is typically sent within a certain, predefined interval following the scheduled drop-off time (which may be fixed by the server or set by the caregiver). Server 22 checks for a response from device 34, at a primary response checking step 62. Upon receiving a positive response or a reply from primary caregiver that no follow-up is currently needed, server 22 concludes the daily reminder process, at a termination step 64.

On the other hand, should device 34 return a negative response, or fail to return any response at all, server 22 will send a reminder to the next contact identifier in the chain, at a secondary reminder step 66. As noted earlier, the negative response from the primary caregiver may identify the secondary caregiver who is responsible for dropping the child off on the given day, or alternatively, the server may autonomously choose the secondary caregiver who is to be alerted. For example, the server may send a text or voice message to device 44 and solicit a response, typically by means of a simple text or voice response. Server 22 checks for a positive response from device 44, at a secondary response checking step 68, and proceeds to termination step 64 when a positive response is received.

If server 22 fails to receive a positive response at step 68, it checks to determine whether there are any further contact identifiers in the present list that have not yet been contacted, at a list checking step 70. (As noted earlier, if the primary caregiver has identified a particular secondary caregiver at step 62, then the "list" in this case will include only this single secondary caregiver.) If there are any further contact identifiers in the present list, the process returns to step 66 to issue a reminder to the next device in the chain. Otherwise, upon reaching the end of the list without having received a positive response, server issues an alert, at an alarm step 72. As noted earlier, at this step server 22 may place a call to primary caregiver 32 or to the child's daycare facility or to some other number specified by the caregiver when setting up the application. If all else fails, the server may contact an emergency service, for example by placing a call to 911.

It will be appreciated that the embodiments described above are cited by way of example, and that the present invention is not limited to what has been particularly shown and described hereinabove. Rather, the scope of the present invention includes both combinations and subcombinations of the various features described hereinabove, as well as variations and modifications thereof which would occur to persons skilled in the art upon reading the foregoing description and which are not disclosed in the prior art.

## Claims

1. A method for automated communication, comprising:
receiving in a server (22) scheduling information with regard to a child, including a daily drop-off time of the child on at least a certain day of the week, an identity of a primary caregiver (32) who is usually responsible for dropping off the child at the drop-off time, and a respective contact identifier of at least one secondary caregiver (42);
automatically sending, over a communication channel (36) from the server (22) to a mobile communication device (34) of the primary caregiver (32) on the certain day at a time within a predefined interval following the drop-off time, a first query as to whether the primary caregiver (32) dropped off the child, the first query including a choice allowing the primary caregiver to indicate a secondary caregiver (42) to be queried;
receiving from the primary caregiver (32) a response to the first query; and
upon failing to receive a positive reply to the first query, automatically sending from the server (22), over a communication network (30), at least one second query to the respective contact identifier of the secondary caregiver(42) identified in the received response to the first query, as to whether the at least one secondary caregiver (42) dropped off the child.

2. The method according to claim 1, wherein the first query includes at least one control (40) indicating a secondary caregiver (42) who may be chosen by the primary caregiver(32) as the secondary caregiver(42) to be queried.

3. The method according to claim 1 or 2, and comprising downloading to a mobile communication device (34) of the primary caregiver (32) a client software application for installation on the mobile communication device (34), wherein the server (22) receives the scheduling information from the client software application and sends the first query to be processed by the client software application and presented to the primary caregiver (32) by the mobile communication device (34).

4. The method according to any of claims 1-3, wherein sending the at least one second query comprises sending a text message to a mobile communication device (44) of the at least one secondary caregiver (42).

5. The method according to any of claims 1-4, wherein sending the at least one second query comprises placing a voice call to a mobile communication device (44) of the at least one secondary caregiver (42).

6. The method according to any of claims 1-5, wherein sending the at least one second query comprises sending a sequence of respective second queries to a succession of secondary caregivers (42) whose contact numbers are stored on the server (22), until one of the secondary caregivers (42) gives a positive reply.

7. The method according to any of claims 1-6, and comprising automatically monitoring an activity of at least the primary caregiver (32) so as to detect that the child has been dropped off, and canceling one or more of the first and second queries upon detecting that the child has been dropped off.

8. Apparatus (22) for automated communication, comprising:
a communication interface (28);
a memory (26), configured to store information with regard to a child, including a daily drop-off time of the child on at least a certain day of the week, an identity of a primary caregiver (32) who is usually responsible for dropping off the child at the drop-off time, and a respective contact identifier of at least one secondary caregiver (42); and
a processor (24), which is configured to send automatically, via the communication interface to a mobile communication device (34) of the primary caregiver (32) on the certain day at a time within a predefined interval following the drop-off time, a first query as to whether the primary caregiver (32) dropped off the child, the first query including a choice allowing the primary caregiver (32) to indicate a secondary caregiver (42) to be queried, and to receive from the primary caregiver (32) a response to the first query, and upon failing to receive a positive reply to the first query, to send automatically, via the communication interface (28) at least one second query to the respective contact identifier of the secondary caregiver (42) identified in the received response to the first query, as to whether the at least one secondary caregiver caregiver (42) dropped off the child.

9. The apparatus according to claim 8, wherein the processor (24) is configured to issue an alert upon failing to receive a positive reply to any of the first and second queries.

10. The apparatus according to claim 8 or 9, wherein a client software application is downloaded to a mobile communication device (34) of the primary caregiver (32) for installation on the mobile communication device, and wherein the processor is configured to receive the scheduling information from the client software application and to send the first query to be processed by the client software application and presented to the primary caregiver by the mobile communication device.

11. The apparatus according to any of claims 8-10, wherein the at least one second query comprises a text message sent to a mobile communication device (44) of the at least one secondary caregiver (42).

12. The apparatus according to any of claims 8-11, wherein the at least one second query comprises a voice call placed to a mobile communication device (44) of the at least one secondary caregiver (42).

13. The apparatus according to any of claims 8-12, wherein the processor (24) is configured to send a sequence of respective second queries to a succession of secondary caregivers (42) whose contact numbers are stored in the memory(26) until one of the secondary caregivers (42) gives a positive reply.

14. The apparatus according to any of claims 8-13, wherein the processor (24) is configured to automatically monitor an activity of at least the primary caregiver (32) so as to detect that the child has been dropped off, and to cancel one or more of the first and second queries upon detecting that the child has been dropped off.

15. A computer software product, comprising a non-transitory computer-readable medium in which program instructions are stored, which instructions, when read by a computer (22), cause the computer (22) to store information with regard to a child, including a daily drop-off time of the child on at least a certain day of the week, an identity of a primary caregiver (32) who is usually responsible for dropping off the child at the drop-off time, and a respective contact identifier of at least one secondary caregiver (42),
wherein the instructions cause the computer (22) to send automatically, via a communication channel (36) to the primary caregiver (32) on the certain day at a time within a predefined interval following the drop-off time, a first query as to whether the primary caregiver (32) dropped off the child, the first query including a choice allowing the primary caregiver(32) to indicate a secondary caregiver (42) to be queried, and to receive from the primary caregiver (32) a response to the first query and upon failing to receive a positive reply to the first query, to send automatically, via a communication network (30), at least one second query to the respective contact identifier of the secondary caregiver (42) identified in the received response to the first query, as to whether the at least one secondary caregiver (42) dropped off the child.

## Patentansprüche

1. Verfahren zur automatischen Kommunikation, umfassend:
Empfangen von Terminierungsinformation hinsichtlich eines Kindes in einem Server (22), einschließlich einer täglichen Ablieferungszeit für das Kind an mindestens einem bestimmten Wochentag, einer Identität einer Hauptbetreuungsperson (32), die gewöhnlich für das Abliefern des Kindes zur Ablieferungszeit verantwortlich ist, und einer jeweiligen Kontaktkennung mindestens einer Nebenbetreuungsperson (42);
automatisches Versenden einer ersten Anfrage, ob die Hauptbetreuungsperson (32) das Kind abgeliefert hat, über einen Kommunikationskanal (36) von dem Server (22) an ein mobiles Kommunikationsgerät (34) der Hauptbetreuungsperson (32) an dem bestimmten Tag zu einer Zeit innerhalb eines vorbestimmten Zeitraums nach der Ablieferungszeit, wobei die erste Anfrage eine Wahlmöglichkeit umfasst, die es der Hauptbetreuungsperson erlaubt, eine zu befragende Nebenbetreuungsperson (42) anzugeben;
Empfangen einer Antwort auf die erste Anfrage von der Hauptbetreuungsperson (32); und
bei Nichterhalt einer positiven Antwort auf die erste Anfrage automatisches Versenden mindestens einer zweiten Anfrage von dem Server (22) über ein Kommunikationsnetzwerk (30) an die jeweilige Kontaktkennung der Nebenbetreuungsperson (42), die in der auf die erste Anfrage empfangenen Antwort bestimmt ist, ob die mindestens eine Nebenbetreuungsperson (42) das Kind abgeliefert hat.

2. Verfahren nach Anspruch 1, wobei die erste Anfrage mindestens eine Steuerelement (40) umfasst, die eine Nebenbetreuungsperson (42) angibt, die von der Hauptbetreuungsperson (32) als die zu befragende Nebenbetreuungsperson (42) gewählt werden kann.

3. Verfahren nach Anspruch 1 oder 2, zudem umfassend das Herunterladen einer Kundensoftwareanwendung auf ein mobiles Kommunikationsgerät (34) der Hauptbetreuungsperson (32) zur Installation auf dem mobilen Kommunikationsgerät (34), wobei der Server (22) die Terminierungsinformation von der Kundensoftwareanwendung empfängt und die von der Kundensoftwareanwendung zu bearbeitende und der Hauptbetreuungsperson (32) von dem mobilen Kommunikationsgerät (34) zu unterbreitende erste Anfrage versendet.

4. Verfahren nach einem der Ansprüche 1 bis 3, wobei das Versenden der mindestens einen zweiten Anfrage das Versenden einer Textnachricht an ein mobiles Kommunikationsgerät (44) der mindestens einen Nebenbetreuungsperson (42) umfasst.

5. Verfahren nach einem der Ansprüche 1 bis 4, wobei das Versenden der mindestens einen zweiten Anfrage das Tätigen eines Sprachanrufs an ein mobiles Kommunikationsgerät (44) der mindestens einen Nebenbetreuungsperson (42) umfasst.

6. Verfahren nach einem der Ansprüche 1 bis 5, wobei das Versenden der mindestens einen zweiten Anfrage das Versenden einer Reihe von jeweiligen zweiten Anfragen an eine Abfolge von Nebenbetreuungspersonen (42) umfasst, deren Kontaktnummern auf dem Server (22) gespeichert sind, bis eine der Nebenbetreuungspersonen (42) eine positive Antwort gibt.

7. Verfahren nach einem der Ansprüche 1 bis 6, zudem umfassend das automatische Überwachen einer Aktivität zumindest der Hauptbetreuungsperson (32), um festzustellen, dass das Kind abgeliefert wurde, und Stornieren einer oder mehrerer erster und zweiter Anfragen, nachdem festgestellt wird, dass das Kind abgeliefert wurde.

8. Gerät (22) zur automatischen Kommunikation, mit:
einer Kommunikationsschnittstelle (28);
einem Speicher (26), der dazu ausgelegt ist, Informationen hinsichtlich eines Kindes zu speichern, einschließlich einer täglichen Ablieferungszeit für das Kind an mindestens einem bestimmten Wochentag, einer Identität einer Hauptbetreuungsperson (32), die gewöhnlich für das Abliefern des Kindes zur Ablieferungszeit verantwortlich ist, und einer jeweiligen Kontaktkennung mindestens einer Nebenbetreuungsperson (42); und
einem Prozessor (24), der dazu ausgelegt ist, automatisch eine erste Anfrage über die Kommunikationsschnittstelle an ein mobiles Kommunikationsgerät (34) der Hauptbetreuungsperson (32) an dem bestimmten Tag zu einer Zeit innerhalb eines vorbestimmten Zeitraums nach der Ablieferungszeit zu versenden, ob die Hauptbetreuungsperson (32) das Kind abgeliefert hat, wobei die erste Anfrage eine Wahlmöglichkeit umfasst, die es der Hauptbetreuungsperson (32) erlaubt, eine zu befragende Nebenbetreuungsperson (42) anzugeben, und von der Hauptbetreuungsperson (32) eine Antwort auf die erste Anfrage zu empfangen, und bei Nichterhalt einer positiven Antwort auf die erste Anfrage automatisch über die Kommunikationsschnittstelle (28) mindestens eine zweite Anfrage an die jeweilige Kontaktkennung der Nebenbetreuungsperson (42) zu versenden, die in der auf die erste Anfrage empfangenen Antwort bestimmt ist, ob die mindestens eine Nebenbetreuungsperson (42) das Kind abgeliefert hat.

9. Gerät nach Anspruch 8, wobei der Prozessor (24) ausgelegt ist, bei Nichterhalt einer positiven Antwort auf eine der ersten und zweiten Anfragen einen Warnhinweis abzugeben.

10. Gerät nach Anspruch 8 oder 9, wobei eine Kundensoftwareanwendung auf ein mobiles Kommunikationsgerät (34) der Hauptbetreuungsperson (32) zur Installation auf dem mobilen Kommunikationsgerät heruntergeladen wird, und wobei der Prozessor dazu ausgelegt ist, die Terminierungsinformation von der Kundensoftwareanwendung zu empfangen und die von der Kundensoftwareanwendung zu bearbeitende und der Hauptbetreuungsperson von dem mobilen Kommunikationsgerät zu unterbreitende erste Anfrage zu versenden.

11. Gerät nach einem der Ansprüche 8 bis 10, wobei die mindestens eine zweite Anfrage eine Textnachricht umfasst, die an ein mobiles Kommunikationsgerät (44) der mindestens einen Nebenbetreuungsperson (42) gesendet wird.

12. Gerät nach einem der Ansprüche 8 bis 11, wobei die mindestens eine zweite Anfrage einen Sprachanruf umfasst, der an ein mobiles Kommunikationsgerät (44) der mindestens einen Nebenbetreuungsperson (42) getätigt wird.

13. Gerät nach einem der Ansprüche 8 bis 12, wobei der Prozessor (24) dazu ausgelegt ist, eine Reihe von jeweiligen zweiten Anfragen an eine Abfolge von Nebenbetreuungspersonen (42) zu versenden, deren Kontaktnummern in dem Speicher (26) gespeichert sind, bis eine der Nebenbetreuungspersonen (42) eine positive Antwort gibt.

14. Gerät nach einem der Ansprüche 8 bis 13, wobei der Prozessor (24) dazu ausgelegt ist, eine Aktivität mindestens der Hauptbetreuungsperson (32) automatisch zu überwachen, um festzustellen, dass das Kind abgeliefert wurde, und eine oder mehrere der ersten und zweiten Anfragen zu stornieren, wenn festgestellt wird, dass das Kind abgeliefert wurde.

15. Computersoftwareprodukt mit einem nicht-flüchtigen Speichermedium, in welchem Programmanweisungen gespeichert sind, welche, wenn sie von einem Computer (22) gelesen werden, bewirken, dass der Computer (22) Informationen bezüglich eines Kindes speichert, einschließlich einer täglichen Ablieferungszeit für das Kind an mindestens einem bestimmten Wochentag, einer Identität einer Hauptbetreuungsperson (32), die gewöhnlich verantwortlich ist für das Abliefern des Kindes zur Ablieferungszeit, und einer jeweiligen Kontaktkennung mindestens einer Nebenbetreuungsperson (42), wobei die Anweisungen bewirken, dass der Computer (22) automatisch über einen Kommunikationskanal (36) an die Hauptbetreuungsperson (32) an dem bestimmten Tag zu einer Zeit innerhalb eines vorgegebenen Zeitraums nach der Ablieferungszeit eine erste Anfrage versendet, ob die Hauptbetreuungsperson (32) das Kind abgeliefert hat, wobei die erste Anfrage eine Wahlmöglichkeit umfasst, die es der Hauptbetreuungsperson (32) erlaubt, eine zu befragende Nebenbetreuungsperson (42) anzugeben, und von der Hauptbetreuungsperson (32) eine Antwort auf die erste Anfrage empfängt, und bei Nichterhalt einer positiven Antwort auf die erste Anfrage automatisch über ein Kommunikationsnetzwerk (30) mindestens eine zweite Anfrage an die jeweilige Kontaktkennung der Nebenbetreuungsperson (42) versendet, die in der auf die erste Anfrage empfangenen Antwort bestimmt ist, ob die mindestens eine Nebenbetreuungsperson (42) das Kind abgeliefert hat.

## Revendications

1. Procédé de communication automatisée, comprenant les opérations, consistant à
recevoir dans un serveur (22) des informations de planification par rapport à un enfant, comportant une heure quotidienne de dépose de l'enfant au moins un certain jour de la semaine, une identité d'un fournisseur principal de soins (32), qui a habituellement pour mission de déposer l'enfant à l'heure de dépose et un identifiant de contact respectif d'au moins un fournisseur secondaire de soins (42) ;
envoyer automatiquement, sur un canal de communication (36) depuis le serveur (22) à un dispositif de communication mobile (34) du fournisseur principal de soins (32), un certain jour à une certaine heure dans un intervalle prédéfini qui suit l'heure de dépose, une première requête quant à la question qui est de savoir si le fournisseur principal de soins (32) a déposé l'enfant, la première requête comportant un choix permettant au fournisseur principal de soins d'indiquer un fournisseur secondaire de soins (42) à requérir;
recevoir du fournisseur principal de soins (32) une réponse à la première requête et
à défaut de recevoir une réponse positive à la première requête, envoyer automatiquement depuis le serveur (22), sur un réseau de communication (30), au moins une seconde requête à l'identifiant de contact respectif du fournisseur secondaire de soins (42), identifié dans la réponse reçue à la première requête, quant à la question qui est de savoir si le au moins un fournisseur secondaire de soins (42) a déposé l'enfant.

2. Procédé selon la revendication 1, dans lequel la première requête comporte au moins une commande (40), indiquant un fournisseur secondaire de soins (42), qui peut être choisi par le fournisseur principal de soins (32) comme fournisseur secondaire de soins (42) à requérir.

3. Procédé selon la revendication 1 ou 2 et comprenant l'opération, consistant à
télécharger sur un dispositif de communication mobile (34) du fournisseur principal de soins (32) une application logicielle client pour l'installation sur le dispositif de communication mobile (34), dans lequel le serveur (22) reçoit les informations de planification de la part de l'application logicielle client et envoie la première requête à traiter par l'application logicielle client et présentée au fournisseur principal de soins (32) par le dispositif de communication mobile (34).

4. Procédé selon l'une quelconque des revendications 1 à 3, dans lequel l'opération, consistant à envoyer la au moins une seconde requête, comprend l'opération, consistant à envoyer un message texte à un dispositif de communication mobile (44) du au moins un fournisseur secondaire de soins (42).

5. Procédé selon l'une quelconque des revendications 1 à 4, dans lequel l'opération, consistant à envoyer la au moins une seconde requête, comprend l'opération, consistant à passer un appel vocal à un dispositif de communication mobile (44) du au moins un fournisseur secondaire de soins (42).

6. Procédé selon l'une quelconque des revendications 1 à 5, dans lequel l'opération, consistant à envoyer la au moins une seconde requête, comprend l'opération, consistant à envoyer une séquence de secondes requêtes respectives à une succession de fournisseurs secondaires de soins (42), dont les numéros de contact sont stockés sur le serveur (22), jusqu'à ce que l'un des fournisseurs secondaires de soins (42) donne une réponse positive.

7. Procédé selon l'une quelconque des revendications 1 à 6 et comprenant l'opération, consistant à
surveiller automatiquement une activité d'au moins le fournisseur principal de soins (32), de façon à détecter que l'enfant a été déposé et à
annuler une ou plusieurs des première et seconde requêtes après détection que l'enfant a été déposé.

8. Appareil (22) pour une communication automatisée, comprenant :
une interface de communication (28) ;
une mémoire (26), configurée pour stocker des informations par rapport à un enfant, comportant une heure quotidienne de dépose de l'enfant au moins un certain jour de la semaine, une identité d'un fournisseur principal de soins (32), qui a habituellement pour mission de déposer l'enfant à l'heure de dépose et un identifiant de contact respectif d'au moins un fournisseur secondaire de soins (42) et
un processeur (24), qui est configuré pour envoyer automatiquement, par l'intermédiaire de l'interface de communication, à un dispositif de communication mobile (34) du fournisseur principal de soins (32), un certain jour à une certaine heure dans un intervalle prédéfini qui suit l'heure de dépose, une première requête quant à la question qui est de savoir si le fournisseur principal de soins (32) a déposé l'enfant, la première requête comportant un choix permettant au fournisseur principal de soins (32) d'indiquer un fournisseur secondaire de soins (42) à requérir et pour recevoir, de la part du fournisseur principal de soins (32), une réponse à la première requête et à défaut de recevoir une réponse positive à la première requête, d'envoyer automatiquement par l'intermédiaire de l'interface de communication (28), au moins une seconde requête à l'identifiant de contact respectif du fournisseur secondaire de soins (42), identifié dans la réponse reçue à la première requête, quant à la question qui est de savoir si le au moins un fournisseur secondaire de soins (42) a déposé l'enfant.

9. Appareil selon la revendication 8, dans lequel le processeur (24) est configuré pour émettre une alerte à défaut de recevoir une réponse positive à l'une quelconque des première et seconde requêtes.

10. Appareil selon la revendication 8 ou 9, dans lequel une application logicielle client est téléchargée sur un dispositif de communication mobile (34) du fournisseur principal de soins (32) pour une installation sur le dispositif de communication mobile et dans lequel le processeur est configuré pour recevoir les informations de planification, provenant de l'application logicielle client et pour envoyer la première requête à traiter par l'application logicielle client et présentée au fournisseur principal de soins par le dispositif de communication mobile.

11. Appareil selon l'une quelconque des revendications 8 à 10, dans lequel la au moins une seconde requête comprend un message texte, envoyé à un dispositif de communication mobile (44) du au moins un fournisseur secondaire de soins (42).

12. Appareil selon l'une quelconque des revendications 8 à 11, dans lequel la au moins une seconde requête comprend un appel vocal, passé à un dispositif de communication mobile (44) du au moins un fournisseur secondaire de soins (42).

13. Appareil selon l'une quelconque des revendications 8 à 12, dans lequel le processeur (24) est configuré pour envoyer une séquence de secondes requêtes respectives à une succession de fournisseurs secondaires de soins (42), dont les numéros de contact sont stockés dans la mémoire (26), jusqu'à ce que l'un des fournisseurs secondaires de soins (42) donne une réponse positive.

14. Appareil selon l'une quelconque des revendications 8 à 13, dans lequel le processeur (24) est configuré pour
surveiller automatiquement une activité d'au moins le fournisseur principal de soins (32), de façon à détecter que l'enfant a été déposé et pour
annuler une ou plusieurs des première et seconde requêtes après détection que l'enfant a été déposé.

15. Produit logiciel informatique, comprenant un support lisible par ordinateur, non transitoire, dans lequel sont stockées des instructions de programme, lesquelles instructions, lorsqu'elles sont lues par un ordinateur (22), amènent l'ordinateur (22) à stocker des informations par rapport à un enfant, comportant une heure quotidienne de dépose de l'enfant au moins un certain jour de la semaine, une identité d'un fournisseur principal de soins (32), qui a habituellement pour mission de déposer l'enfant à l'heure de dépose et un identifiant de contact respectif d'au moins un fournisseur secondaire de soins (42),
dans lequel les instructions amènent l'ordinateur (22) à envoyer automatiquement, par l'intermédiaire d'un canal de communication (36), au fournisseur principal de soins (32), un certain jour à une certaine heure dans un intervalle prédéfini qui suit l'heure de dépose, une première requête quant à la question qui est de savoir si le fournisseur principal de soins (32) a déposé l'enfant, la première requête comportant un choix permettant au fournisseur principal de soins (32) d'indiquer un fournisseur secondaire de soins (42) à requérir et de recevoir, de la part du fournisseur principal de soins (32), une réponse à la première requête et, à défaut de recevoir une réponse positive à la première requête, d'envoyer automatiquement par l'intermédiaire d'un réseau de communication (30), au moins une seconde requête à l'identifiant de contact respectif du fournisseur secondaire de soins (42), identifié dans la réponse reçue à la première requête, quant à la question qui est de savoir si le au moins un fournisseur secondaire de soins (42) a déposé l'enfant.
